# EUROPEAN PATENT APPLICATION

(11) **EP 4 685 829 A1**
(43) Date of publication of application: **28.01.2026**
(21) Application number: 24190663.5
(22) Date of filing: 24.07.2024
(51) Int. Cl.: H01F 30/04, H01F 27/38, H01F 3/10, B60L 58/20, H02J 7/00, B60L 53/22

(54) **MULTIPORT TRANSFORMER AND INTEGRATED HIGH VOLTAGE AND LOW VOLTAGE CONVERTER**

(71) Applicant: Delta Electronics (Thailand) Public Co., Ltd., Samutprakarn 10280 (TH)
(72) Inventor: NJIENDE, Hugues, 33102 Paderborn (DE)
(74) Representative: Hoefer & Partner Patentanwälte mbB

(57) **Abstract**

Multiport transformer (1), comprising: a primary winding (2) connected to a first port (3), a secondary winding (4) connected to a second port (5), and a tertiary winding (6) connected to a third port (7), wherein the primary winding (2), the secondary winding (4), and the tertiary winding (6) are electrically insulated from one another; an integrated magnetic core structure (8) comprising a plurality of magnetically connected cores (8.1 - 8.4) which define winding windows (15 - 17) in which the primary winding (2), the secondary winding (4), and the tertiary winding (6) are wound, the cores being stacked on top of one another along a stacking direction (9); wherein of said cores (8.1 - 8.4), the integrated magnetic core structure (8) comprises one first core (8.1), one second core (8.2), and one third core (8.3); said first core (8.1) and said second core (8.2) are stacked such that said first core (8.1) and said second core (8.2) together define at least one first winding window (15); and wherein said second core (8.2) and said third core (8.3) are stacked such that said second core (8.2) and said third core (8.3) together define at least one second winding window (16). The invention further concerns an integrated high voltage and low voltage converter (100) comprising the multiport transformer (1).

## Description

### Field of the Invention

The invention concerns a multiport transformer and an integrated high voltage and low voltage converter.

### Background of the Invention

From for example US2022/0172880, US2016/0016479, US2022/0286055, US20230223840, and US2022/0224236, transformers with multiple different outputs, so-called "multiport transformers" are known. These are commonly employed in electric vehicle ("EV") applications. In such applications, a multiport transformer is employed which has a single input, for example a grid, and multiple outputs, for example to a high voltage battery and to a low voltage battery of the EV.

Commonly, these different outputs are achieved via separate transformers, which however is electrically and magnetically inefficient, as well as cost- and space-expensive. Therefore, the need arises for integrated multiport transformers in which the multiple output transformer is achieved on an integrated magnetic core structure.

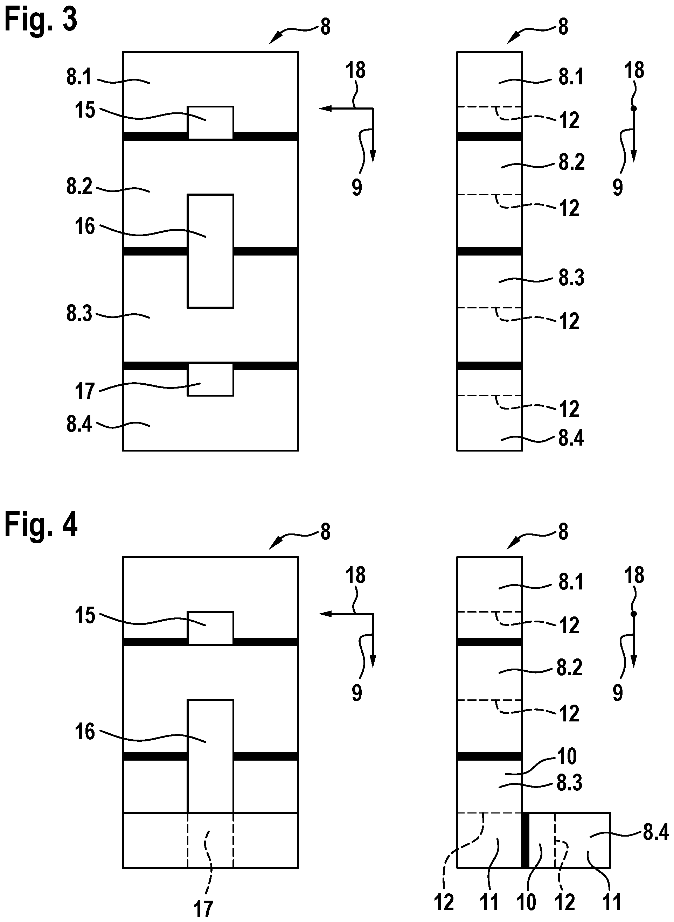

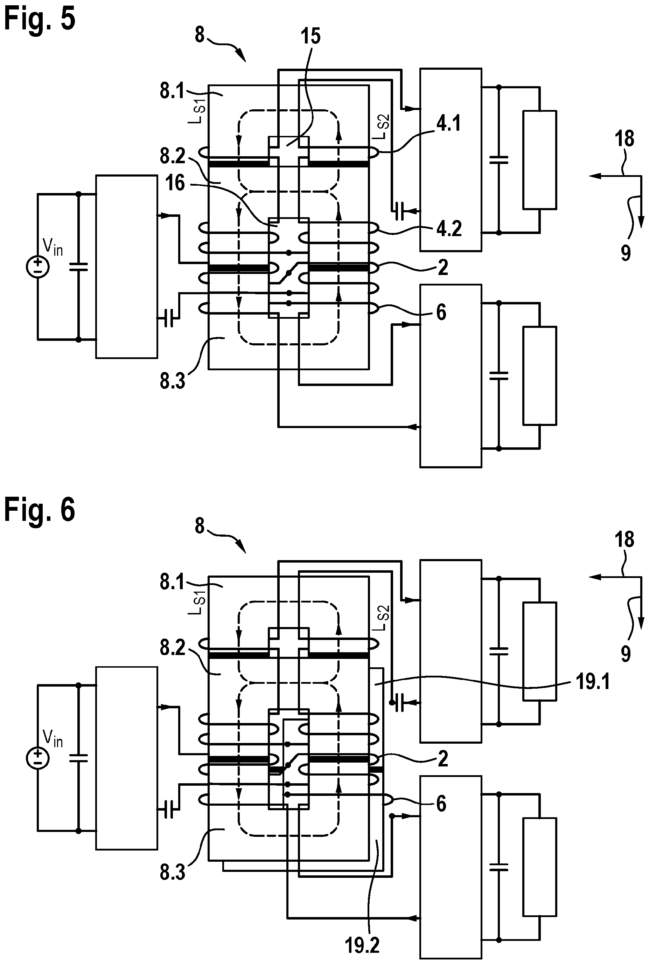

Aforementioned US2022/0172880, especially Fig. 4a thereof, demonstrates a multiport transformer with a primary winding, a secondary winding, and a tertiary winding on a magnetic core structure. Therein, however, the magnetic core structure comprising two cores, which are in Fig. 4a in a UU arrangement. Other arrangements shown are UI (Fig. 4b), E∃ (Fig. 6a), and E-I (Fig. 6b). Such arrangements of magnetic cores in an integrated magnetic core structure have multiple disadvantages. For example, magnetic inductance efficiency is reduced, disadvantageous magnetic leakage current is increased, and electrical efficiency is reduced while noise is increased. Furthermore, these arrangements do not provide an integration of choke windings, which thus need to be provided as discrete, separate components. This increases costs, space, and lowers magnetic and electrical efficiency.

### Summary

It is an object of the present invention to overcome these deficiencies. In particular, it is an object of the present invention to provide a multiport transformer with high magnetic and electrical efficiency, and which is space-efficient and cost-efficient, especially with a low amount of magnetic material. It is further an object of the present invention to provide an integrated high voltage and low voltage converter with these advantages.

The solution of these objects is achieved by the subject matter of the independent claim. The dependent claims contain advantageous embodiments of the present invention.

In particular, the solution of these objects is achieved by the multiport transformer according to claim 1.

The multiport transformer comprises a primary winding connected to a first port, a secondary winding connected to a second port, and a tertiary winding connected to a third port. Therein, the primary winding, the secondary winding, and the tertiary winding are electrically insulated from one another. The transformer further comprises an integrated magnetic core structure. The integrated magnetic core structure comprises a plurality of magnetically connected cores. The magnetically connected cores define winding windows in which or into which the primary winding, the secondary winding, and the tertiary winding are wound. The cores are stacked on top of one another along a stacking direction. Of said cores, the integrated magnetic core structure comprises one first core, one second core, and one third core. The first core and the second core are stacked such that said first core and said second core together define at least one first winding window. Furthermore, said second core and said third core are stacked such that said second core and said third core together define at least one second winding window.

By providing a multiport transformer with an integrated magnetic core structure defining at least one first winding window and at least one second winding window, space and material efficiency is increased and the amount of necessary magnetic material is reduced. Furthermore, core losses caused by high magnetic flux density can be reduced, thereby increasing overall efficiency of the transformer.

In addition, by providing separate first and second winding windows, different windings of the primary, secondary, and/or tertiary or portions respectively thereof can be placed in these separate winding windows, thereby expanding functionality and adaptability of the transformer. For instance, the magnetic properties of each of the winding windows can be separately adapted, via for example core dimensions and/or distance between windings, etc.

As will be explained below, the integrated magnetic core can comprise further cores apart from the aforementioned first, second, and third core(s).

Preferably, the second core is arranged adjacently to the first core. Furthermore, the third core is arranged adjacently to the second core. In other words, in order and in stacking direction, the first core, the second core, and the third core are arranged, especially with no further cores therebetween.

A winding window is especially defined as an at least partially open space between leg portions and body portions of one or more magnetic cores, wherein, in such a winding window, at least one of the primary, secondary and/or tertiary windings and/or portions respectively thereof are wound at least partially around said portions of one or more magnetic cores.

The multiport transformer comprises a plurality of winding windows, i.e. at least one first winding window and at least one second winding window. The first winding window(s) and the second winding window(s) are correspondingly stacked, with respect to each other, along the stacking direction of the cores. Conversely, a plurality of first winding windows are arranged adjacently to one another along a direction perpendicular to the stacking direction. For example, an E∃ arrangement comprises two first winding windows arranged adjacently to one another in width direction perpendicular to their stacking direction. On the other hand, an EE∃ arrangement has two first winding windows and two second winding windows, which are stacked in stacking direction with respect to one another and arranged adjacent to the stacking direction in their own respect. These aspects will be especially discussed with regard to preferable embodiments including multiple transformer phases.

The aforementioned first core, second core, and third core can respectively have different shapes so long as two separate winding windows, namely the at least one first winding window and the at least one second winding window, are formed thereby. For instance, in some examples, one of the cores may be I-shaped, while the others are U-shaped or E-shaped or W-shaped.

In the foregoing and in the following, body portions and leg portions of cores may be referred to. Therein, the leg portions of the cores respectively extend from the body portion. In particular, in some embodiments, the cores are arranged such that their leg portions extend in stacking direction. Furthermore, in some embodiments, the leg portions extend from their respective body portion with an angle of roughly 90°.

For instance, one exemplary embodiment is an EEl-configuration (first core E-shaped, second core E-shaped, third core I-shaped), with leg portions of the first core abutting or directly facing (with for example an air gap) a body portion of the second core, a body portion and leg portions of the first core and the body portion of the second core together defining the at least one first winding window. In such an example, leg portions of the second core abut or directly face a body portion of the third core, which as an I-shaped core comprises no leg portions, wherein the body portion and the leg portions of the second core and the body portion of the third core together define at least one second winding window. Further similar configuration possibilities are EI∃, I∃∃, etc. These configuration possibilities, as also discussed below, are also expandable to U-shaped cores (IUU, UIU, UUI) and/or W-shaped cores (WWI, WIW, IWW).

In other configuration possibilities without an I-shaped core, preferable embodiments are EE∃, E∃∃, UUU, and WWW (U, W with corresponding "turning" as with EE∃ for example).

For example, the foregoing described arrangement of end faces of leg portions of said first core facing the body portion of the second core can correspond to UU-arrangement, EE-arrangement, or WW-arrangement. In other words, especially in configurations in which neither the first core nore the second core are preferably I-shaped cores, these preferably face the same direction with respect to the stacking direction.

In general, it is noted that "W-shaped" cores commonly refer to rake-shaped cores comprising, due to the necessity of return legs for magnetic flux, five leg portions connected by one body portion, even though a "W" literally speaking comprises only four "legs".

In general, it is also noted that a body portion of a core magnetically and preferably structurally connects the leg portions of the core with one another for magnetic flux.

Preferably, the foregoing described "integrated" magnetic core structure comprising the stacked cores means that the cores are part of a single component. These stacked cores may for example be formed monolithic with one another. For the sake of tuning the magnetic properties, especially magnetic saturation, there may be magnetic air gaps provided between the stacked magnetic cores. Especially in such cases, the stacked cores may not be monolithic with one another. Nonetheless, these are integrated into a single component, especially by being stacked directly (with possible additional air gap) on top of one another, and especially by being potted together and/or being provided in the same common housing. Of course, the term "air gap" does not necessarily and strictly refer to "air", although it can, but also can refer to a filler material between gaps of the cores.

Preferably, the leg portions of the cores are formed monolithically with the body portion of the respective core. In other preferable embodiments, one or more leg portions and the body portion of one (the same) core are formed by I-shaped cores connected magnetically to one another, with possible air gaps therebetween. For example, a U-core can comprise three I-shaped cores forming the two leg portions and the body portion, an E-core can likewise comprise four I-shaped cores, and a W-core can comprise up to six I-shaped cores (five legs, one body portion). In all such cases, each core is characterized by comprising leg portions which, either monolithically or with air gap, extend perpendicularly from the body portion, and all leg portions of that core extend in common from one body portion.

In some preferable embodiments, the third core and the second core are arranged adjacently and such that end faces of leg portions of the third core respectively face end faces of the leg portions of the second core. In this example, the body portion and the leg portions of the third core and the body portion and the leg portions of the second core together define the at least one second winding window.

Furthermore, winding windows in both senses are separated from one another via portions of the magnetic cores, hence E∃ arrangement comprises exactly two first winding windows.

The different winding windows provide advantageously, in an integrated magnetic core, tunable and different magnetic inductance portions which can be suitably adapted for application needs of the different ports (primary, secondary, tertiary) of the multiport transformer.

In preferable embodiments, the secondary winding comprises a first secondary winding portion wound in the first winding window and a second secondary winding portion in the second winding window and electrically connected to the first secondary winding portion in the first winding window. Thereby, different portions of secondary winding can be tuned with different magnetic inductances of the respective winding window or properties of the portions of the core(s) forming said winding window, without the need of additional and extrinsic components.

Preferably, the first secondary winding portion of the secondary winding is a choke winding and the second secondary winding portion of the secondary winding is magnetically coupled with the primary winding. In other words, preferably, the second secondary winding portion receives magnetic inductance from the primary winding (via one or more of the cores), which is choked by the electrically connected first secondary winding portion, and output via the second port. In other words, the second secondary winding and the primary winding are parts of an electrical transformer, together with the tertiary winding, and the first secondary winding is separate from the electrical transformer while being integrated in the overall, multiport transformer device.

Therein, advantageously, the first secondary winding portion and the second secondary winding portion, i.e. the choke and the secondary winding, can be tuned with individual inductances via their respective winding windows, while being integrated in the single magnetic core structure.

In further preferable embodiments, the primary winding is wound in the second winding window. In other words, the primary winding and the secondary winding are preferably wound in the same winding window. Thereby, magnetic and electrical efficiency of the transformer is increased.

Preferably, the integrated magnetic core structure further comprises a fourth core arranged adjacently to the third core such that said third core and said fourth core together define at least one third winding window.

In other words, preferably, the multiport transformer comprises at least one third winding window. Preferably, as also explained above with respect to the at least one first and at least one second winding window, the transformer comprises a plurality of adjacent third winding windows, especially in preferable multiphase embodiments.

Preferably, the fourth core is arranged such that leg portions of the fourth core extend, from the body portion of the third core, in a direction perpendicular to the stacking direction. In other words, preferably, the fourth core comprises leg portions and is turned perpendicularly to the other cores with respect to the stacking direction. This provides a space-efficient stacking of cores while maintaining efficiency of magnetic flux density .

As also described above with regard to embodiments of the first core, the second core, and the third core, the fourth core is preferably an I-shaped core or a U-shaped core, an E-shaped core or a W-shaped core. For example, one preferable configuration of all four cores is EEEI or for example EI∃∃ or EEI∃ or I∃∃∃ (or the like with U- or W-shaped cores), as long as at least one first, at least one second, and at least one third winding window(s) are respectively formed between the cores. On the other hand, possible preferable configuration of all four cores is EE∃∃, and the like with none of the cores being I-shaped.

In some preferable embodiments, the tertiary winding comprises a first tertiary winding portion and a second tertiary winding portion electrically connected to the first tertiary winding portion. Therein, the first tertiary winding portion is wound in the second winding window. The second tertiary winding portion is wound in the third winding window. Thereby, magnetic inductance of different portions of the tertiary winding, which is connected to the third port, can be tuned appropriately without necessitating external or additional components.

Preferably, the first tertiary winding portion is connected magnetically to the primary winding in the second winding window. Further preferably, the second tertiary winding portion is a choke winding in the third winding window and connected electrically to the first tertiary winding portion. In other words, the second tertiary winding portion and the third winding window preferably form a choke winding for the tertiary winding.

In some preferable embodiments, the tertiary winding is wound only in the second winding window. Therein, a nearest distance from the tertiary winding to the primary winding is greater than a nearest distance from the primary winding to the secondary winding in the second winding window. In this regard, the nearest distance is preferably a distance in the stacking direction. Further preferably, the nearest distance is a distance perpendicular to the stacking direction, i.e. a radial distance parallel to a winding radius of the respective windings. For example, in preferable cases in which the primary winding and the secondary winding and the tertiary winding are wound around one another co-axially, the aforementioned nearest distance is a radial distance perpendicular to the stacking direction.

By providing the tertiary winding only in the second winding window and increasing the distance to the primary winding as compared to the distance between the primary and the secondary winding, this increased distance acts as a choke for the tertiary winding for achieving resonant inductance. Thus, an additional component or core is not necessary, thereby saving space and material.

In some preferable embodiments, the integrated magnetic core structure further includes at least one leakage core plate, further preferably at least two leakage core plates. The leakage core plate(s) is/are arranged adjacently to and/or at least partially within the second winding window. Therein, the tertiary winding is wound at least partially around the leakage core plate(s). Advantageously, the leakage core plates provide magnetic leakage for the tertiary winding, thereby acting as a choke for the tertiary winding for achieving resonant inductance.

Preferably, the tertiary winding is wound at least partially around the leakage core plate(s) as well as at least partially around the second core and/or the third core, i.e. those forming the second winding window.

Further preferably, the leakage core plate(s) is/are arranged adjacently to and outside the second winding window such that the primary winding and/or the secondary winding are sandwiched, especially in a radial direction perpendicular to the stacking direction, between one of the leakage core plate(s) and the second core and/or the third core. Thereby, the leakage core plates provide preferably magnetic leakage only for the tertiary winding, and not the primary and/or the secondary winding.

In some preferable embodiments, the leakage core plate(s) is/are arranged within the second winding window such that the primary winding and/or the secondary winding are sandwiched between one of the leakage core plate(s) and one of the second core and/or the third core. Thereby, the leakage core plate(s) being provided within the second winding window advantageously provides aforementioned resonant inductance effect while saving space and material costs. Further, the aforementioned sandwiching also provides preferably magnetic leakage only for the tertiary winding.

Preferably, at least one of the leakage core plates is bar-shaped. Thereby, the leakage core plates with this shape can be easily inserted into winding windows or placed near the cores, without greatly increasing overall space of the transformer and while providing leakage inductance.

Further preferably, at least one of the leakage core plates comprises the same shape as the first core and/or the second core and/or the third core. In this regard, the term "same shape" refers to the same basic geometrical shape. Therein, one or more dimensions of the respective leakage core plate may be different from the corresponding one or more dimensions of the respective core. For instance, the second core, the third core, and two leakage core plates may respectively be U-shaped, while a height and/or thickness and/or width of at least one of the leakage core plates is reduced or increased versus the respective same dimension of the second core and/or the third core. In some preferable embodiments, the height and width of the leakage core plates are the same as that of the second core and of the third core, while their thickness is reduced, roughly by about half, due especially to the leakage core plates (only) providing leakage, and not necessarily needing to carry inductance used by the primary and/or the secondary winding. Thereby, the leakage inductance can be easily tuned for the tertiary winding, while saving space and materials and while preferably reducing magnetic interference for the primary and/or secondary winding.

In some examples, the multiport transformer is a single phase transformer. Therein, the first core and/or the second core of the integrated magnetic core structure is U-shaped, respectively comprising two leg portions defining one first winding window, especially together with the body portion of the U-shaped first and/or second core. Preferably, the first core and the second core, i.e. both, are U-shaped. In other embodiments, only one is U-shaped, while the other is preferably I-shaped.

In some examples, the multiport transformer is a two-phase transformer. Therein, the first core and/or the second core of the integrated magnetic core structure is E-shaped, comprising three leg portions, wherein the leg portions of the first core and/or the second core define two first winding windows, especially with the body portion of the E-shaped first and/or second core. Preferably, the first core and the second core, i.e. both, are E-shaped. In other embodiments, only one is E-shaped, while the other is preferably I-shaped.

Preferably, in the two-phase transformer, the tertiary winding is wound only around one or more middle leg portion(s) of the second winding window. Preferably, the tertiary winding is wound only around the middle leg portion of the second core and/or the third core. The foregoing "second core and/or third core" is to mean that one of the second core and third core can be I-shaped, the winding then being only around middle leg portion of the E-shaped core. On the other hand, preferably both are E-shaped, while the tertiary winding is wound only around middle leg portions of only the second core or of only the third core, or is wound around the middle leg portions of both the second core and the third core.

In some examples, the multiport transformer is a three-phase transformer. Therein, the first core and/or the second core of the integrated magnetic core structure is W-shaped, comprising five leg portions, wherein the leg portions of the first core and/or the second core define four first winding windows, especially with the body portion of the W-shaped first and/or second core.

Preferably, in the three-phase transformer, the tertiary winding is wound so as to be fully within the second winding windows. In other words, herein, the tertiary winding is not wound around any of the outer legs, i.e. the first or last leg along a width direction perpendicular to the stacking direction, of the second and/or third core. In particular, along said width direction, in order, the tertiary winding is wound only around a second leg and a fourth leg of the second core and/or the third core. This advantageously provides the resonant inductance in a space- and material-saving manner and without external components such as additional chokes.

In the foregoing, and as will be clear from the following embodiments and figures, it is to be understood that the primary windings and/or the secondary windings and/or the tertiary windings may generally be provided on respectively single cores. For example, the first secondary winding portion on the first core, the second secondary winding portion on the second core, the primary winding on the third core, and the tertiary winding on the fourth core. On the other hand, one or more of the aforementioned windings may be provided together in a winding window formed by two cores in unison. For example, the primary winding, the second secondary winding, and the tertiary winding may all be provided on the second and the third core. In particular, the primary winding and/or the secondary winding and/or the tertiary winding may be wound co-axially. In one example, the tertiary winding is wound co-axially around the primary winding and the secondary winding, which are in turn stacked on top of another in stacking direction.

The present invention also concerns an integrated high voltage and low voltage converter. The converter comprises the multiport transformer according to any one of the foregoing described preferable embodiments and examples. Therein, the first port is connected to a grid, the second port is connected to a high voltage battery, and the third port is connected to a low voltage battery.

Thereby, the integrated high voltage and low voltage converter can supply, from the grid, the high voltage battery and the low voltage battery with separate voltages/currents, while simultaneously being space-efficient and cost-effective, especially with respect to saving magnetic materials.

The foregoing described preferable embodiments and configurations may be appropriately combined.

Further details, advantages, and features of the preferred embodiments of the present invention are described in detail with reference to the figures. Therein:

### Brief Description of the Drawings

Fig. 1 shows a schematic circuit and configuration diagram of an integrated high voltage and low voltage converter (henceforth "converter") with a multiport transformer (henceforth "transformer") of a first embodiment of the present invention;
Fig. 2 shows a schematic diagram of the converter of the first embodiment;
Fig. 3 shows a schematic detail view of components of the converter of the first embodiment;
Fig. 4 shows a schematic detail view of components of the converter of a modification to the first embodiment of the present invention;
Fig. 5 shows a schematic diagram of a converter of a second embodiment;
Fig. 6 shows a schematic diagram of a converter of a third embodiment;
Fig. 7 shows a schematic detail view of components of the converter of the third embodiment;
Fig. 8 shows a schematic detail view of components of the converter of a modification to the third embodiment;
Fig. 9 shows a schematic detail view of components of the converter of a further modification to the third embodiment;
Fig. 10 shows a schematic detail view of components of the converter of a further modification to the third embodiment;
Fig. 11 shows a schematic detail view of components of the converter of a further modification to the third embodiment;
Fig. 12 shows a schematic diagram of a converter of a fourth embodiment;
Fig. 13 shows a schematic diagram of the converter of the fourth embodiment;
Fig. 14 shows a schematic diagram of a converter of a fifth embodiment;
Fig. 15 shows a schematic diagram of a converter of a modification to the fifth embodiment;
Fig. 16 shows a schematic diagram of a converter of a further modification to the fifth embodiment;
Fig. 17 shows a schematic detail view of components of a converter of a sixth embodiment;
Fig. 18 shows a schematic detail view of a converter of a modification to the sixth embodiment;
Fig. 19 shows a schematic detail view of a converter of a further modification to the sixth embodiment;
Fig. 20 shows a schematic diagram of a converter of a seventh embodiment;
Fig. 21 shows a schematic diagram of the converter of the seventh embodiment;
Fig. 22 shows a schematic diagram of a converter of an eighth embodiment;
Fig. 23 shows a schematic diagram of a converter of a modification to the eighth embodiment;
Fig. 24 shows a schematic diagram of a converter of a further modification to the eighth embodiment
Fig. 25 shows a schematic detail view of components of a converter of a ninth embodiment; and
Fig. 26 shows a schematic detail view of a converter of a modification to the ninth embodiment.

### Description of the Embodiments

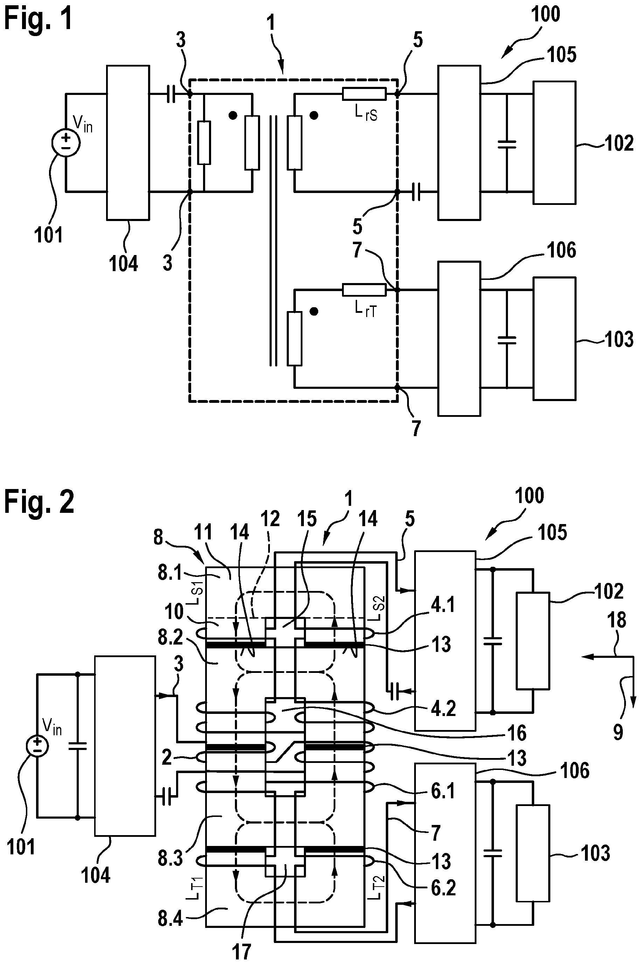

A first embodiment of the present invention will be described with reference to Figs. 1 to 4.

In particular, Fig. 1 shows a schematic circuit diagram of an integrated high voltage and low voltage converter 100 (henceforth "converter") with a multiport transformer 1 (henceforth "transformer") of a first embodiment of the present invention. In the following, an overview of the converter 100 will be given for general understanding, and then specifics of the transformer 1 will be explained.

As can be taken from Fig. 1, the converter 100 comprises the transformer 1. The transformer 1, which is multiport, comprises a first port 3, a second port 5, and a third port 7, and is denoted by a dotted line. The converter 100, as will be explained, is configured to convert a voltage input on the first port 3 side to two outputs, namely the second port 5 side and the third port 7 side.

Herein, the first port 3 is connected to a grid 101 as the input, and outputs to a high voltage battery 102 via the second port 5 and to a low voltage battery 103 via the third port 7.

Thereby, the converter 100 can for instance simultaneously charge, from grid 101 input, a high voltage battery 102 and a low voltage battery 103.

The converter 100 preferably further includes AC-DC-converters 104, 105, and 106, which suitably convert the output from the transformer 1 appropriately to DC for the batteries 102, 103, as well as from grid 101 input via AC-DC-converter 104.

In some preferable examples, at least one of the AC-DC-converters 104, 105, 106 is configured as a bidirectional converter 104 - 106 for bidirectional charging.

The present converter 100 and the present transformer 1 are single-phase.

Furthermore, as shown in Fig. 1 and denoted via the dotted line, the transformer 1 of the present embodiment integrates the windings of a primary side P, a secondary side S, and a tertiary side T (explained below) as well as chokes Lrs and Lrt as resonant inductances in a single component. This will now be explained with respect to the transformer 1 in Fig. 2 and the following.

The transformer 1 comprises a primary winding 2 connected to the first port 3, a secondary winding 4 connected to the second port 5, and a tertiary winding 6 connected to the third port 7.

The transformer 1 further comprises an integrated magnetic core structure 8. Said primary winding 2, secondary winding 4, and tertiary winding 6 are wound around the magnetic core structure 8. Their winding axis in the present embodiment is parallel to the stacking direction 9. A radial direction 18 is defined parallel to their winding radius and perpendicular to the stacking direction 9.

In this regard, it is noted that the winding configuration shown in the figures is preferably schematic and for better overview. In some application examples, the winding configuration shown in the figures is true with regard to placement, but may be adapted with regard to number of turns. In other application examples, at least one or some or all of the winding configurations are such that one or more of the windings 2, 4, 6 are arranged co-axially with one another. In other words, before explaining the present embodiment's winding configuration, for example the primary winding 2 and the secondary winding 4 can be wound around one another and the core 8 in a co-axial arrangement. These different configuration possibilities are preferably adapted to inductance and current requirements for the application of the converter 100 and transformer 1. For example, in some applications, the tertiary winding 6 may carry low voltage, high current, and may thus necessitate relatively thick wires, and may thus be arranged separately, and not co-axially, from the primary winding 2 and/or secondary winding 4. This general understanding applies to all of the primary winding 2, secondary winding 4, and tertiary winding 6. Therefore, in the following, winding configurations are described with respect to "winding windows".

In view of Fig. 2, the integrated magnetic core structure 8 (henceforth "core structure 8") comprises a plurality of magnetically connected cores 8.1, 8.2, 8.3, and 8.4 (henceforth "core(s) 8.x"). In the present embodiment, the core structure 8 comprises four cores 8.1 - 8.4.

The cores 8.1 - 8.4 are stacked on top of one another along a stacking direction 9. Herein and in the following, a "positive stacking direction 9" is defined as extending from top to bottom, especially from second port 5 to third port 7 or from core 8.1 to core 8.4, and a "negative stacking direction 9" will be defined oppositely, i.e. from bottom to top.

Each of the cores 8.1 - 8.4 comprises leg portions 10 extending from a body portion 11, with a dotted line denoting their boundary 12. Herein, the leg portions 10 and the body portion 11 of each core 8.1 - 8.4 are formed integrally, especially monolithically, with one another. As can be taken from Fig. 2, the cores 8.1 - 8.4 are U-shaped, comprising each two leg portions 10 and one body portion 11 magnetically and structurally connecting the leg portions 10.

The cores 8.1 - 8.4 are separated via air gaps 13. In some examples, air gaps 13 may also individually separate the leg portions 10 and the body portion 11 of one or more cores 8.1 - 8.4.

Of the shown cores 8.1 - 8.4, one first core 8.1 and one second core 8.2 directly adjacent to one another along the stacking direction 9 are arranged with the leg portions 10 of the first core 8.1 have end faces 14 facing the body portion 11 of the second core 8.2, thereby defining a first winding window 15.

The core structure 8 further comprises a third core 8.3 directly adjacent to the second core 8.2. Herein, end faces 14 of the third core 8.3 directly face end faces 14 of the second core 8.2, thereby defining a second winding window 16.

Further, in the present embodiment, the core structure 8 comprises a fourth core 8.4, with end faces 14 of the fourth core 8.4 facing the body portion 11 of the directly adjacent third core 8.3, thereby defining a third winding window 17.

The secondary winding 4 comprises a first secondary winding portion 4.1 which is wound in the first winding window 15. Herein, the first secondary winding portion 4.1 is wound around the leg portions 10 of the first core 8.1. The secondary winding portions 4.1, 4.2 are electrically connected to one another, and particularly consist of a continuous wire.

The secondary winding 4 further comprises a second secondary winding portion 4.2 which is wound in the second winding window 16. As denoted above, although shown as being wound around (only) the leg portions 10 of the second core 8.2, the second secondary winding portion 4.2 is not strictly limited thereto, and may also additionally or alternatively be wound at least partially (in stacking direction 9) around the third core 8.3, or may be co-axial with the primary winding 2.

The primary winding 2 is also wound in the second winding window 16.

In the present embodiment, the tertiary winding 6 comprises a first tertiary winding portion 6.1 and a second tertiary winding portion 6.2, wherein the first portion 6.1 is in the second winding window 16, and the second portion 6.2 is in the third winding window 17.

Thereby, in the present embodiment, both the secondary winding 4, via the first secondary winding portion 4.1, and the tertiary winding 6, via the second tertiary winding portion 6.2, comprise integrated chokes, i.e. integrated resonant inductances Lrs and Lrt (see: Fig. 1).

Thereby, in a particularly advantageous space- and material-saving manner, the transformer 1 of the present converter 100 provides integrally, within a single magnetic component 8, an input 3 and two outputs 5, 6 as well as resonant inductances and chokes.

A modification of the transformer 1 of Fig. 2 will be explained with respect to Figs. 3 and 4.

In Fig. 3, for comparison, the magnetic core structure 8 of Fig. 2 is shown on the left. On the right of Fig. 3, a side-view of the same magnetic core structure 8 is shown with the aforementioned boundaries 12 shown for ease of understanding.

In Fig. 4, a modification is shown. Therein, the fourth core 8.4 is arranged such that its leg portions 10 extend towards the body portion 11 of the third core 8.3 along the radial direction 18, i.e. perpendicular to the stacking direction 9.

Such a modification may also be employed for the other cores 8.1 - 8.3. In particular, the first core 8.1 may also be arranged so as to extend primarily in the radial direction 18, as shown for fourth core 8.4 in Fig. 4.

Now, with respect to Fig. 5, a second embodiment will be explained.

The core structure 8 of the present embodiment includes the first core 8.1, the second core 8.2, and the third core 8.3. In other words, the core structure 8 of the present embodiment does not include the fourth core 8.4. Thus, the core structure 8 of the present embodiment includes the first winding window 15 and the second winding window 16.

Herein, the tertiary winding 6 is wound entirely within the second window 16, especially together with the entirety of the primary winding 2 and together with the second secondary winding portion 4.2.

Furthermore, resonant inductance and choking of the tertiary winding 6 is achieved via distancing the tertiary winding 6 from the primary winding2 and/or the second secondary winding 4.2. In particular, a nearest distance between the tertiary winding 6 and the primary winding 2 is greater than a nearest distance between the second secondary winding 4.2 and the primary winding 2.

In general, said distancing is achieved in radial direction 18 and/or in stacking direction 9. In other words, with respect to radial direction 18, the tertiary winding 6 is wound "looser" or with a larger winding radius (radial direction 18) than the other windings 2, 4.2, especially with a larger winding radius than that of the second secondary winding 4.2. This advantageously increases the inductance, similar to providing an integrated choke.

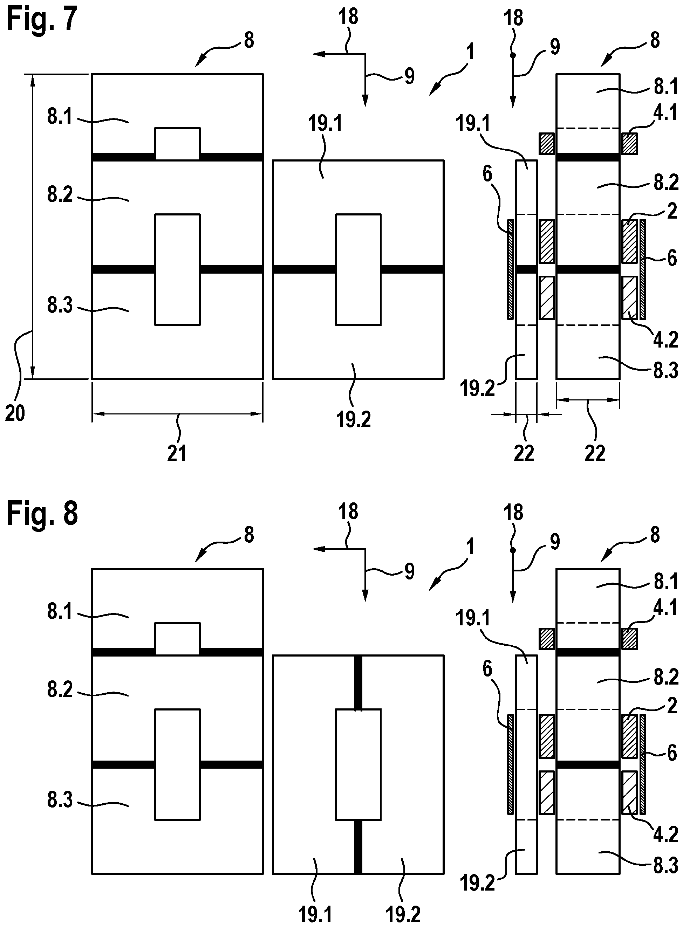

Now, with respect to Figs. 6 and 7, a third embodiment will be explained. Therein, Fig. 6 shows the same view as Figs. 2 and 5, while Fig. 7 demonstrates on the left the front-view of only the core structure 8 and the leakage core plates 19.1, 19.2 (separate, explosion-style view), while the right side demonstrates a side-view along the radial direction 18.

Herein, the core structure 8 further comprises leakage core plates 19. In particular, the core structure 8 comprises two leakage core plates 19.1, 19.2.

In the present embodiment, the leakage core plates 19.1, 19.2 are arranged adjacently to the second winding window 16. The tertiary winding 6 is wound in the second winding window 16 as well as around portions of the leakage core plates 19.1, 19.2. In the present embodiment, the tertiary winding 6 is wound around the leg portions 10 of the third core 8.3 and the second leakage core plate 19.2. As can be taken from Fig. 6, the tertiary winding 6 is wound so as to cross through the winding window 16 so as to thereby comprise reversed winding directions (see magnetic flux arrows in Fig. 6) and achieve a magnetic flux circuit.

As can be taken particularly from Fig. 7, the leakage core plates 19.1, 19.2 are respectively also U-shaped, and are arranged, in the present example in the same manner and parallel to the second core 8.2 and the third core 8.3. Furthermore, as shown on the right side of Fig. 7, the primary winding 2 and the second secondary winding portion 4.2 are wound around the second core 8.2 and the third core 8.3 (with above explanation regarding winding configurations), while the tertiary winding 6 is wound co-axially with both the second secondary winding portion 4.2 and the primary winding 2. The leakage core plates 19.1, 19.2 are arranged such that the primary winding 2 and the secondary winding 4, here the second secondary winding portion 4.2, are sandwiched between the leakage core plates 19.1, 19.2 and the second core 8.2 and/or the third core 8.3.

Furthermore, a height 20 along the stacking direction 9 and width 21 along the radial direction 18 of the cores 8.1 - 8.3 are equal to a corresponding height 20 and width 21 of the leakage core plates 19.1, 19.2. On the other hand, a thickness 22 of the leakage core plates 19.1, 19.2, perpendicular to the stacking direction 9 and the radial direction 18, is smaller than that of the cores 8.1 - 8.3.

Thereby, the primary winding 2 and the secondary winding 4 are not affected by the leakage core plates 19.1, 19.2, i.e. their inductances are not increased thereby, while the inductance of the tertiary winding 6 on the other hand is.

In Fig. 8, a modification of the third embodiment is shown. Therein, the leakage core plates 19.1, 19.2 are together turned 90° in the plane of the radial direction 18 and the stacking direction 9, such that their air gaps 13 do not align with those of the second core 8.2 and the third core 8.3. this can further increase inductance for the tertiary winding 6.

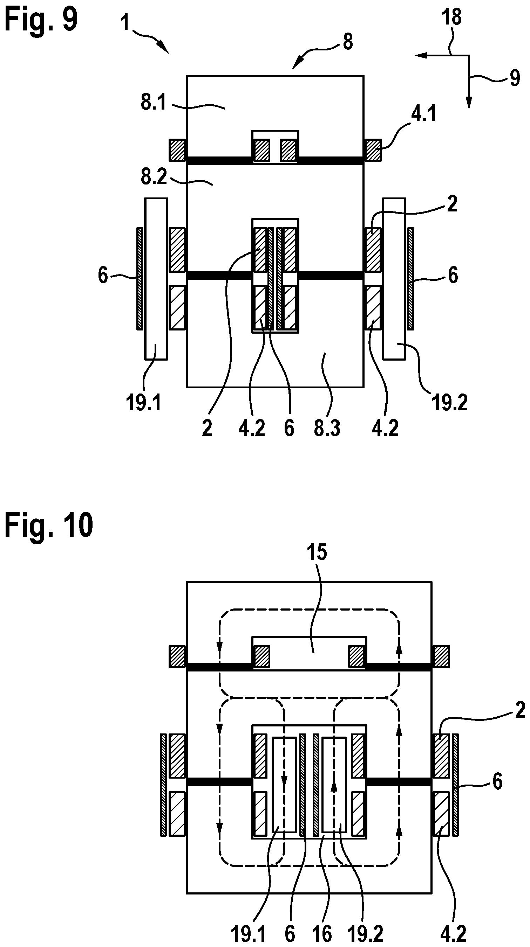

In Fig. 9, a further modification to the third embodiment is shown. Therein, the leakage core plates 19.1, 19.2 are respectively I-shaped or bar-shaped magnetic cores, and are arranged laterally, i.e. side-by-side with the cores 8.1 - 8.3.

As can be taken from Fig. 9, each of the leakage core plates 19.1, 19.2 sandwiches radially outer winding portions of the primary winding 2 and the secondary winding portion 4.2 with the second and third cores 8.2, 8.3.

As demonstrated in Fig. 10, which shows a further modification to embodiment three, the leakage core plates 19.1, 19.2 as bar-shaped cores are placed within the second winding window 16. Therein, each of the leakage core plates 19.1 or 19.2 is sandwiched radially by a tertiary winding 6 portion and a portion of the primary winding 2 and/or a portion of the secondary winding 4.

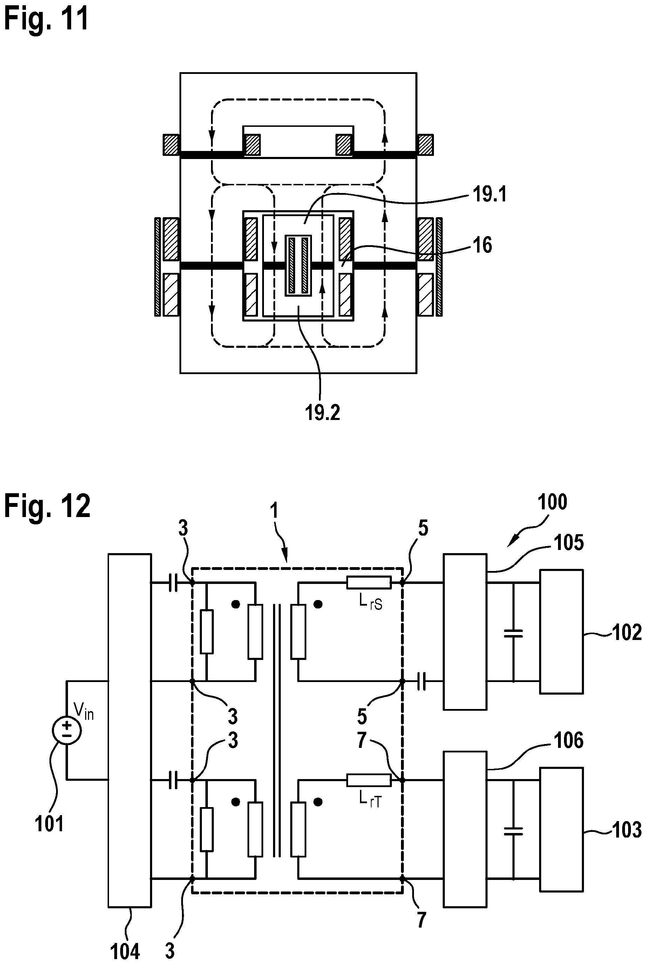

In Fig. 11, another modification to embodiment three is shown. Herein, the leakage core plates 19.1, 19.2 are configured as U-shaped cores, while their dimensions, especially height 20 and width 21 are smaller than those of the second core 8.2 and third core 8.3. Particularly, the leakage core plates 19.1, 19.2 are arranged within the second winding window 16.

These embodiments and modifications have the advantages in that inductances can be adapted to applications, especially for the secondary windings 4 and/or tertiary windings 6, while providing an integrated transformer 1 with a compact size and relatively low amount of magnetic material.

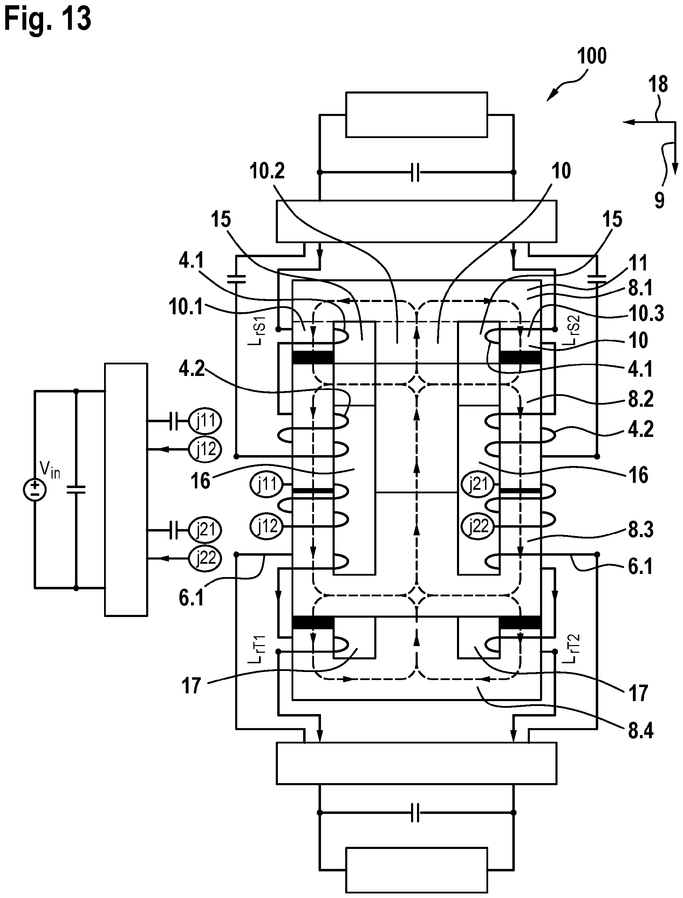

Now, a fourth embodiment will be explained with respect to Figs. 12 and 13. Similarly to Figs. 1 and 2, Fig. 12 shows a schematic circuit diagram for an overview of the converter 100, while Fig. 13 shows specifics of the transformer 1 thereof.

Herein, the multiport transformer 1 is multi-phase, as especially demonstrated by two primary side first ports 3. In other words, the multiport transformer 1 of the present embodiment is an integrated two-phase multiport transformer 1. Each of the second port 5 and the third port 7 are also two-phase, as shown particularly in Fig. 13, which will now be explained.

The core structure 8 comprises the first core 8.1, the second core 8.2, the third core 8.3, and the fourth core 8.4. Herein, each of the cores 8.1 - 8.4 is an E-shaped core, comprising respectively three leg portions 10 and one joining body portion 11.

Thereby, two first winding windows 15, two second winding windows 16, and two third winding windows 17 are achieved.

Similar to the first embodiment, the secondary winding 4 comprises - for each phase - the first secondary winding portion 4.1 and the second secondary winding portion 4.2, wherein the first secondary winding portion 4.1 is - for each phase - in the first winding window 15 and the second secondary winding portion 4.2 is - for each phase - in the second winding window 16.

In other words, in the present embodiment, the transformer 1 comprises one first winding window 15, one second winding window 16 and one third winding window 17 for each phase of the transformer 1, similar to the single-phase transformer 1 of Figs. 1 and 2 (single-phase comprising exactly one of each winding windows 15 - 17).

Furthermore, as demonstrated in Fig. 13 also via connection points j11, j12, j21, j22, the two phases of the transformer 1 are arranged on radially outer leg portions 101, 10.3 of the respective cores 8.1 - 8.4, i.e. arranged on first leg portions 10.1 and third (last) leg portions 10.3 in radial direction 18.

The tertiary winding 6 also comprises the first tertiary winding portion 6.1 in the second winding windows 16 and the second tertiary winding portion 6.2 in the third winding windows 17 - respectively for each phase.

Herein, middle leg portions 10.2 are return legs which close, together with the body portions 11, the magnetic circuits.

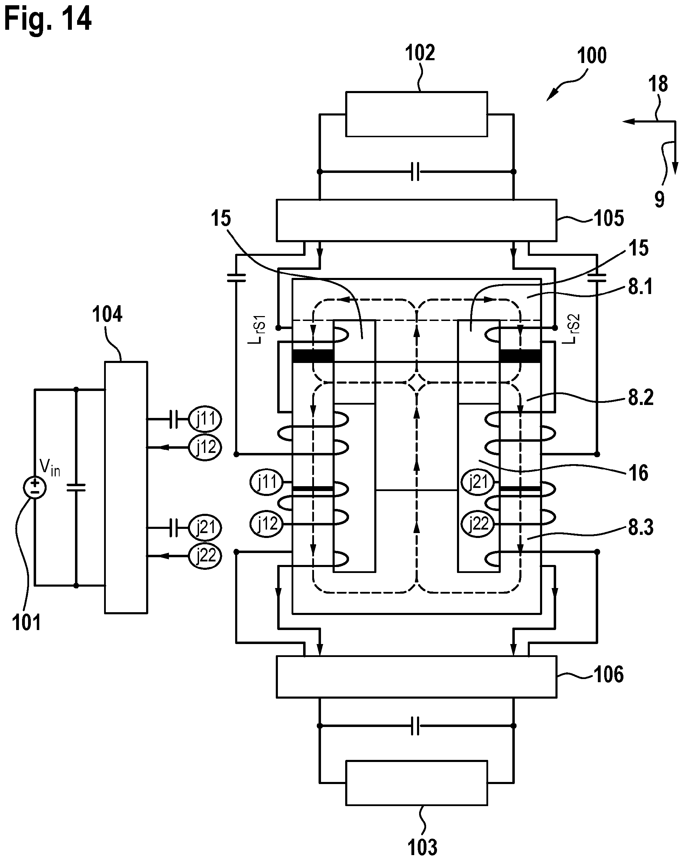

Now, with view on Fig. 14, a fifth embodiment will be explained.

Similar to a combination of the fourth embodiment with the second embodiment shown in Fig. 5, the two-phase transformer 1 in the present fifth embodiment comprises the core structure 8 with one first core 8.1, one second core 8.2, and one third core 8.3, especially without the fourth core 8.4 and thereby without the third winding window 17 (compare with Fig. 13).

Herein, also similarly to the second embodiment, the resonant inductance for the tertiary winding 6 is presently achieved via distancing the tertiary winding 6 within the second winding windows 16 from the primary winding 2 and the secondary winding 4, particularly the second secondary winding portion 4.2.

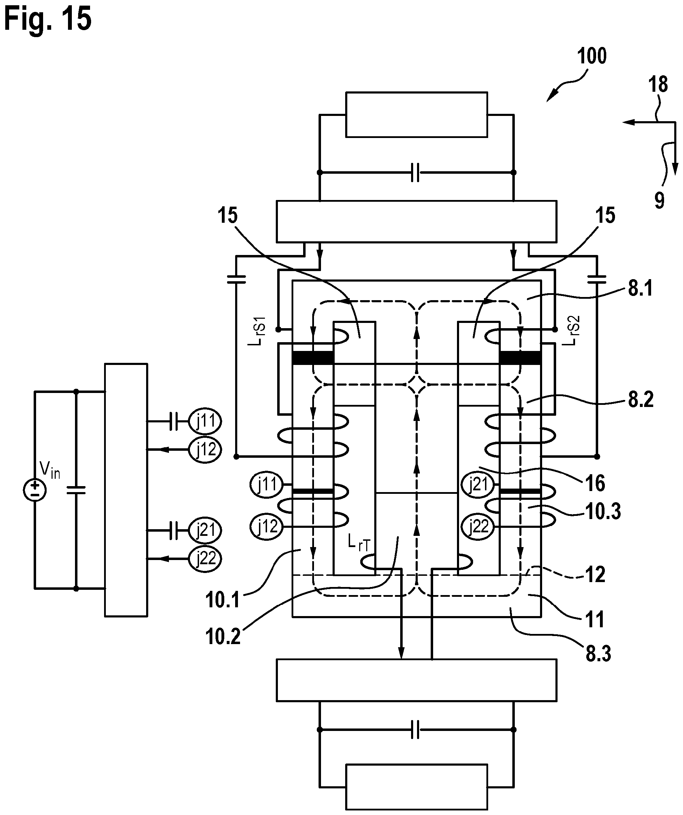

In Fig. 15, a modification to the fifth embodiment is shown. Herein, the tertiary winding 6 is wound around middle leg portions 10.2 of the second core 8.2 and/or the third core 8.3. As elucidated above, the tertiary winding 6 may be wound around only one leg portion 10.2 of either the second core 8.2 or the third core 8.3, or may be wound around both leg portions 10.2 of the second core 8.2 and the third core 8.3 (i.e. each of the middle leg portions 10.2 of the respective two cores 8.2, 8.3 forming the second winding window 16).

Thereby, resonant inductance is achieved while also reducing copper loss or core loss as compared to Fig. 14. On the other hand, inductance and coupling is higher in Fig. 14, which may also be advantageous in certain applications.

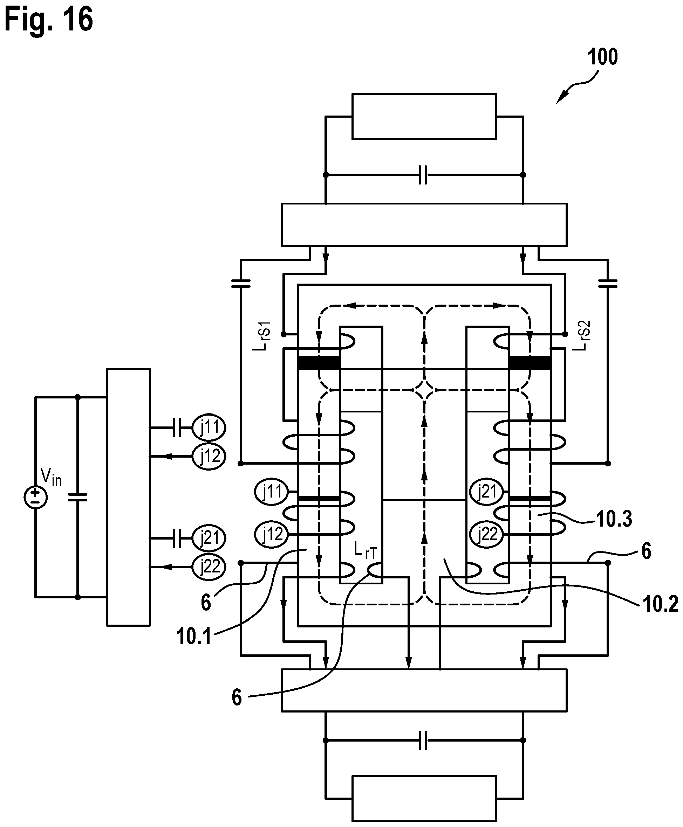

Fig. 16 further demonstrates a further modification of the fifth embodiment. Herein, the tertiary winding 6 is wound around all leg portions 10.1, 10.2, and 10.3 of the second core 8.2 and/or the third core 8.3, i.e. within the second winding windows 16.

This, as compared to Fig. 14 and Fig. 15, further increases coupling and inductance.

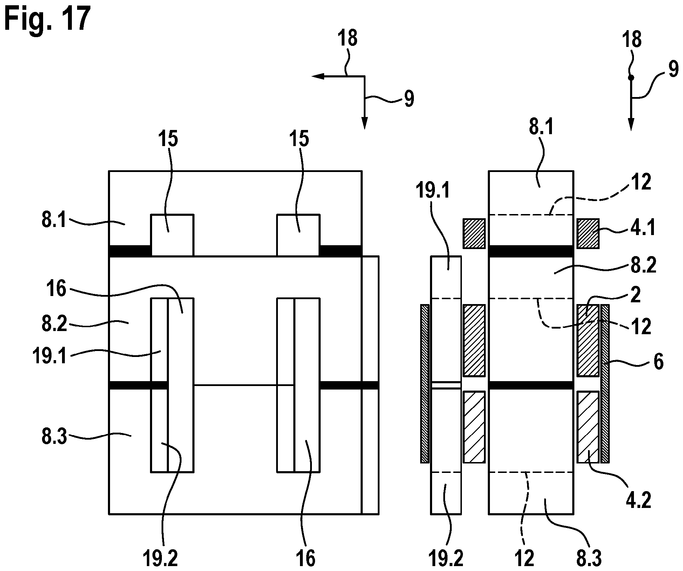

Now, with respect to Fig. 17, a sixth embodiment will be explained. Herein, similar to the third embodiment shown in Figs. 6 and 7, the present embodiment shows the two-phase transformer 1 comprising the first and second leakage core plates 19.1, 19.2.

In the present embodiment, the leakage core plates 19.1, 19.2 are also E-shaped and are arranged parallel to the cores 8.1 -8.3, adjacent to the second winding windows 16. The tertiary winding 6 is wound around the leakage core plates 19.1, 19.2 and the second winding windows 16, especially co-axially with the primary winding 2 and the second secondary winding portion 4.2.

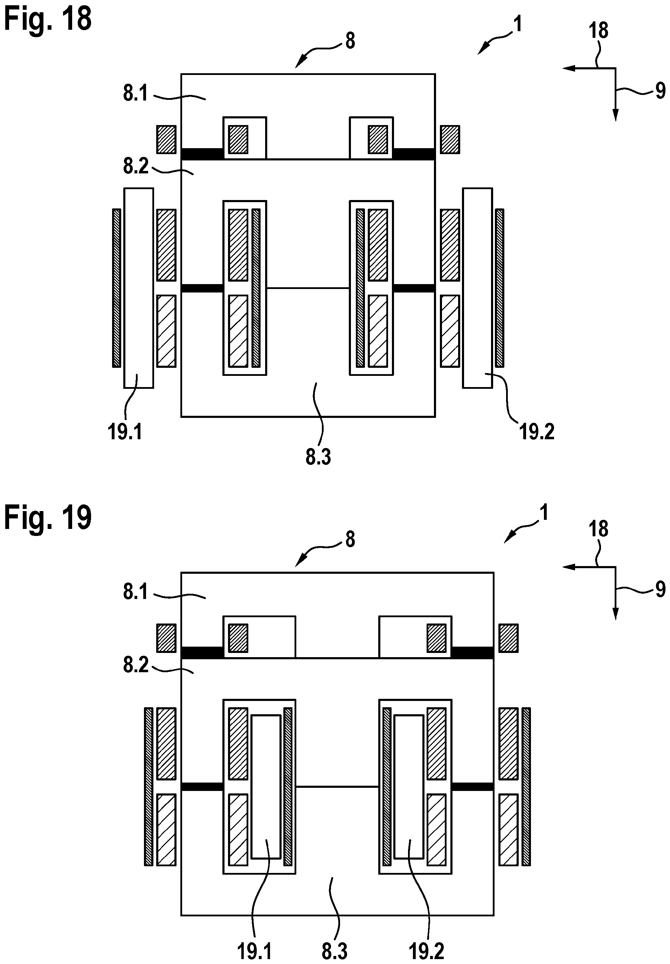

In a modification to the sixth embodiment shown in Fig. 18, similar to the modification of Fig. 9, the leakage core plates 19.1, 19.2 are bar-shaped or I-shaped and are disposed laterally, i.e. in radial direction 18, around the second core 8.2 and the third core 8.3.

In a further modification to the sixth embodiment shown in Fig. 19, similar to the modification of Fig. 10, I-shaped leakage core plates 19.1, 19.2 are disposed in the second winding windows 16, especially respectively one leakage core plate 19.1 or 19.2 in each of the two second winding windows 16.

The further embodiments and modifications to the single-phase transformer 1 or converter 100 of the first to third embodiments can suitably be applied to the two-phase transformer 1 or converter 100 of the fourth to sixth embodiments.

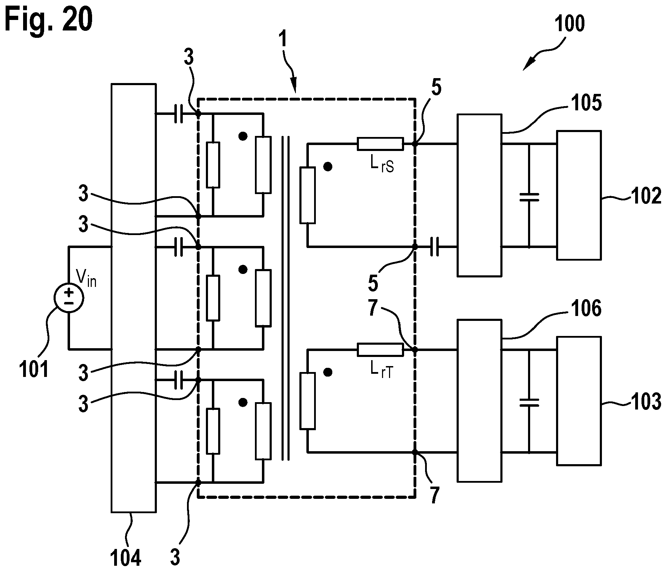

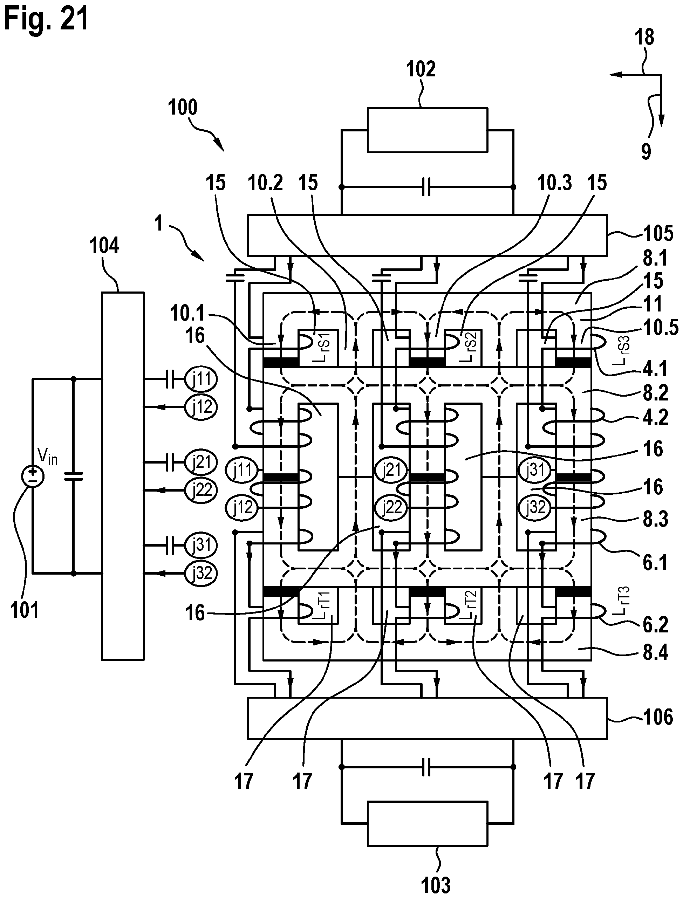

Now, with respect to Figs. 20 and 21, a seventh embodiment of the converter 100 and transformer 1 will be explained.

Herein, the multiport transformer 1 is multi-phase, as especially demonstrated by three primary side first ports 3. In other words, the multiport transformer 1 of the present embodiment is an integrated three-phase multiport transformer 1. Each of the second port 5 and the third port 7 are also three-phase, as shown particularly in Fig. 21, which will now be explained.

The core structure 8 comprises the first core 8.1, the second core 8.2, the third core 8.3, and the fourth core 8.4. Herein, each of the cores 8.1 - 8.4 is a W-shaped core, comprising respectively five leg portions 10 (10.1 - 10.5) and one joining body portion 11.

Thereby, four first winding windows 15, four second winding windows 16, and four third winding windows 17 are achieved.

Similar to the fourth embodiment, the secondary winding 4 comprises - for each phase - the first secondary winding portion 4.1 and the second secondary winding portion 4.2, wherein the first secondary winding portion 4.1 is - for each phase - in the first winding window 15 and the second secondary winding portion 4.2 is - for each phase - in the second winding window 16.

In other words, in the present embodiment, the transformer 1 comprises four first winding windows 15, four second winding windows 16 and four third winding windows 17 for the three phases of the transformer 1.

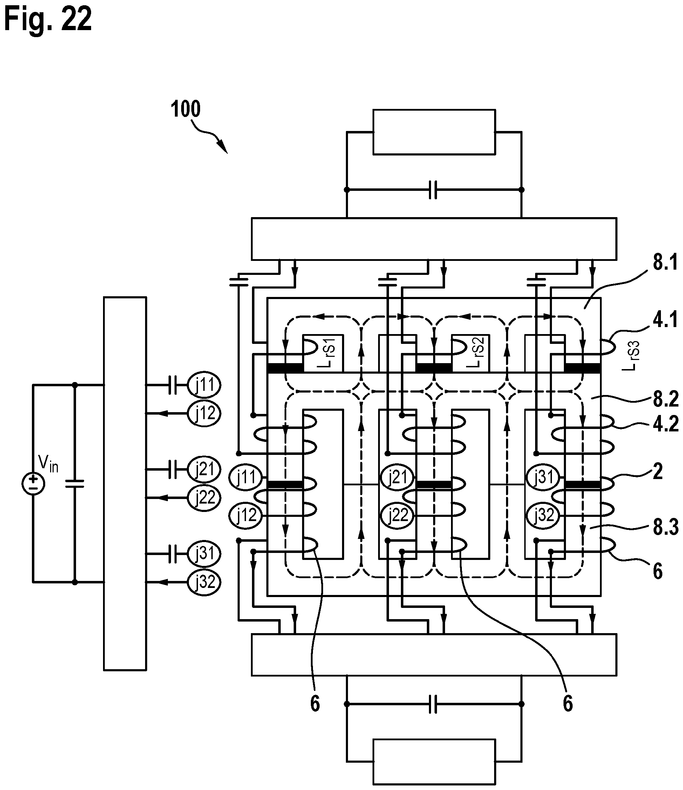

Now, with respect to Fig. 22, an eighth embodiment will be described. Similar to the second embodiment of Fig. 5 and/or the fifth embodiment of Fig. 14, in the present embodiment, the core structure 8 comprises the first core 8.1, the second core 8.2, and the third core 8.3, without an additional fourth core 8.4. In other words, in the present embodiment, the transformer 1 comprises the first winding windows 15, the second winding windows 16, and no third winding windows 17. Thus, in total, the present transformer comprises eight winding windows 15, 16 (four windows each).

Herein, also similar to the second embodiment and/or the fifth embodiment, the resonant inductance for the tertiary winding 6 is presently achieved via distancing the tertiary winding 6 within the second winding windows 16 from the primary winding 2 and the secondary winding 4, particularly the second secondary winding portion 4.2.

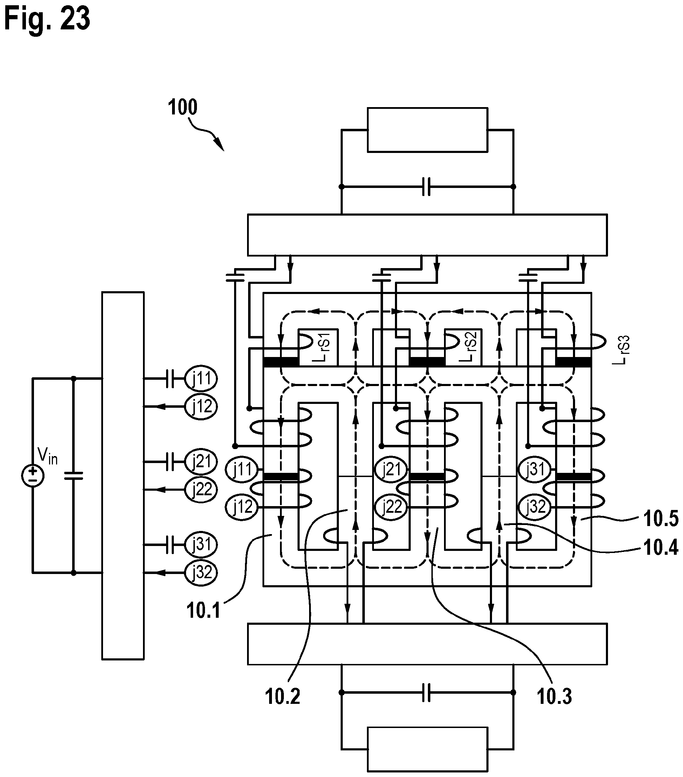

In Fig. 23, a modification to the eighth embodiment is shown. Herein, the tertiary winding 6 is wound only around return leg portions 10.2, 10.4 of the second core 8.2 and/or the third core 8.3, and as elucidated above may be wound around one or both of the respective leg portions 10.2, 10.4 within the second winding windows 16. In other words, the tertiary winding 6 is wound fully within the second winding windows 16, and especially not around any of the outer legs 10.1, 10.4 so as to be partially outside of the second winding windows 16.

Thereby, resonant inductance is achieved while also reducing copper loss or core loss as compared to Fig. 22. On the other hand, inductance and coupling is higher in Fig. 22, which may also be advantageous in certain applications.

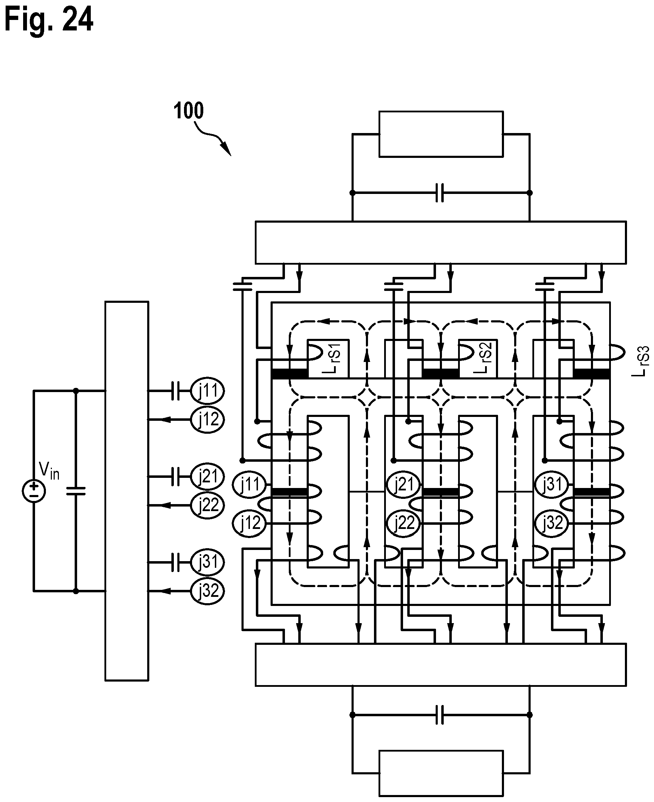

Fig. 24 further demonstrates another modification of the eighth embodiment. Herein, the tertiary winding 6 is wound around all leg portions 10.1 - 10.5 of the second core 8.2 and/or the third core 8.3, i.e. within the second winding windows 16.

This, as compared to Fig. 22 and Fig. 23, further increases coupling and inductance.

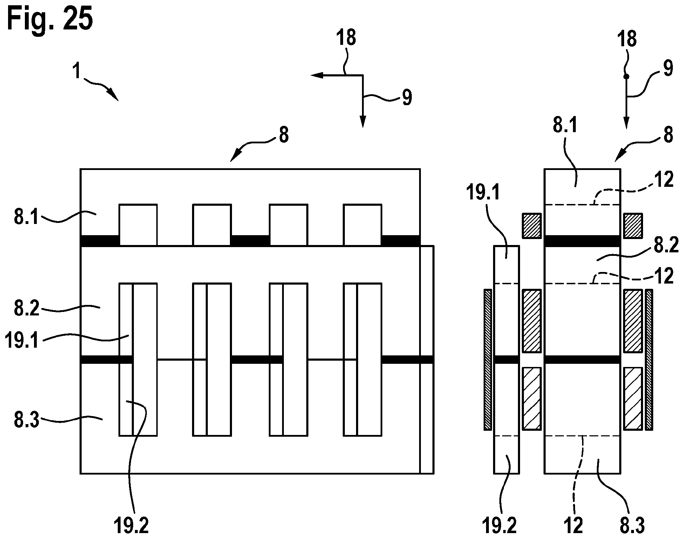

Now, with respect to Fig. 25, a ninth embodiment will be explained. Herein, similar to the third embodiment shown in Figs. 6 and 7 and/or to the sixth embodiment shown in Fig. 17, the present embodiment shows the three-phase transformer 1 comprising the first and second leakage core plates 19.1, 19.2.

In the present embodiment, the leakage core plates 19.1, 19.2 are also W-shaped and are arranged parallel to the cores 8.1 - 8.3, adjacent to the second winding windows 16. The tertiary winding 6 is wound around the leakage core plates 19.1, 19.2 and the second winding windows 16, especially co-axially with the primary winding 2 and the second secondary winding portion 4.2.

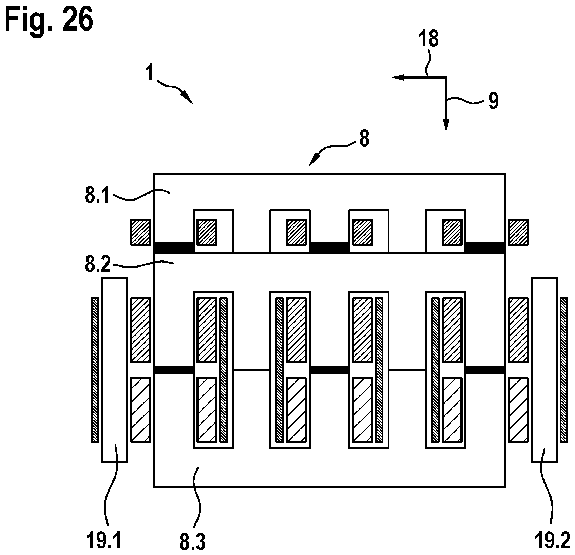

In a modification to the ninth embodiment shown in Fig. 26, similar to the modification of Fig. 9 or Fig. 18, the leakage core plates 19.1, 19.2 are bar-shaped or I-shaped and are disposed laterally, i.e. in radial direction 18, around the second core 8.2 and the third core 8.3.

In a further modification to the ninth embodiment, similar to the modification of Fig. 10, I-shaped leakage core plates 19.1, 19.2 can be disposed in the second winding windows 16, especially respectively one leakage core plate 19.1 or 19.2 in each of the four second winding windows 16. Furthermore, the leakage core plates 19.1 or 19.2 may also in this embodiment be U-shaped, with two of such leakage core plates 19.1, 19.2 arranged within one or more of the second winding windows 16, as demonstrated in Fig. 11. This arrangement may especially also be combined with the two-phase transformer 1 shown in for example Figs. 13 and 14.

The further embodiments and modifications to the single-phase transformer 1 or converter 100 of the first to third embodiments can suitably be applied to the two-phase transformer 1 or converter 100 of the fourth to sixth embodiments and/or to the three-phase transformer 1 or converter 100 of the seventh to ninth embodiments.

As a particular example for such modifications or combinations, it is noted that the first cores 8.1 and/or the fourth cores 8.4 of the two-phase transformer 1 and/or the three-phase transformer 1 may appropriately be disposed or arranged as elucidated with respect to Fig. 4.

In addition to the foregoing written explanations, it is explicitly referred to figures 1 to 26, wherein the figures in detail show circuit diagrams and configuration examples of the invention.

### List of Reference Numerals

- 1: Multiport transformer (transformer)
- 2: primary winding
- 3: first port
- 4: secondary winding
- 4.1: first secondary winding portion
- 4.2: second secondary winding portion
- 5: second port
- 6: tertiary winding
- 6.1: first tertiary winding portion
- 6.2: second tertiary winding portion
- 7: third port
- 8: integrated magnetic core structure (core structure)
- 8.1: core
- 8.2: core
- 8.3: core
- 8.4: core
- 9: stacking direction
- 10: leg portion
- 11: body portion
- 12: boundary
- 13: air gap
- 14: end face
- 15: first winding window
- 16: second winding window
- 17: third winding window
- 18: radial direction
- 19: leakage core plate
- 19.1: first leakage core plate
- 19.2: second leakage core plate
- 20: height
- 21: width
- 22: thickness
- 100: converter
- 101: grid
- 102: high voltage battery
- 103: low voltage battery
- 104: AC-DC-converter
- 105: AC-DC-converter
- 106: AC-DC-converter

## Claims

1. Multiport transformer (1), comprising:
• a primary winding (2) connected to a first port (3), a secondary winding (4) connected to a second port (5), and a tertiary winding (6) connected to a third port (7), wherein the primary winding (2), the secondary winding (4), and the tertiary winding (6) are electrically insulated from one another;
• an integrated magnetic core structure (8) comprising a plurality of magnetically connected cores (8.1 - 8.4) which define winding windows (15 - 17) in which the primary winding (2), the secondary winding (4), and the tertiary winding (6) are wound, the cores being stacked on top of one another along a stacking direction (9); wherein
• of said cores (8.1 - 8.4), the integrated magnetic core structure (8) comprises one first core (8.1), one second core (8.2), and one third core (8.3);
• said first core (8.1) and said second core (8.2) are stacked such that said first core (8.1) and said second core (8.2) together define at least one first winding window (15); and wherein
• said second core (8.2) and said third core (8.3) are stacked such that said second core (8.2) and said third core (8.3) together define at least one second winding window (16).

2. Multiport transformer (1) according to claim 1, wherein the secondary winding (4) comprises a first secondary winding portion (4.1) wound in the first winding window (15), and a second secondary winding portion (4.2) wound in the second winding window (16) and electrically connected to the first secondary winding portion (4.1) of the first winding window (15).

3. Multiport transformer (1) according to claim 2, wherein the first secondary winding (4.1) portion of the secondary winding (4) is a choke winding and the second secondary winding portion (4.2) of the secondary winding (4) is magnetically coupled with the primary winding (2).

4. Multiport transformer (1) according to any one of the foregoing claims, wherein the primary winding (2) is wound in the second winding window (16).

5. Multiport transformer (1) according to any one of the foregoing claims, wherein the integrated magnetic core structure (8) further comprises a fourth core (8.4) arranged adjacently to the third core (8.3) such that said third core (8.3) and said fourth core (8.4) together define at least one third winding window (17).

6. Multiport transformer (1) according to claim 5, wherein the tertiary winding (6) comprises a first tertiary winding portion (6.1) wound in the second winding window (16), and a second tertiary winding portion (6.2) electrically connected to the first tertiary winding portion (6.1) and wound in the third winding window (17).

7. Multiport transformer (1) according to any one of the claims, wherein the tertiary winding (6) is wound only in the second window (16), and wherein a nearest distance from the tertiary winding (6) to the primary winding (2) is greater than a nearest distance from the primary winding (2) to the secondary winding (4) in the second winding window (16).

8. Multiport transformer (1) according to any one of the foregoing claims, wherein the integrated magnetic core structure (8) further includes at least one leakage core plate (19, 19.1, 19.2), wherein the leakage core plate(s) (19, 19.1, 19.2) are arranged adjacently to and/or at least partially within the second winding window (16), and wherein the tertiary winding (6) is wound at least partially around the leakage core plates (19, 19.1, 19.2).

9. Multiport transformer (1) according to claim 8, wherein the leakage core plate(s) (19, 19.1, 19.2) are arranged adjacently to and outside of the second winding window (16) such that the primary winding (2) and/or the secondary winding (4) are sandwiched between one of the leakage core plate(s) (19, 19.1, 19.2) and the second core (8.2) and/or the third core (8.3).

10. Multiport transformer (1) according to claim 8 or claim 9, wherein the leakage core plate(s) (19, 19.1, 19.2) are arranged within the second winding window (16) such that the primary winding (2) and/or the secondary winding (4) are sandwiched between one of the leakage core plates (19, 19.1, 19.2) and the second core (8.2) and/or the third core (8.3).

11. Multiport transformer (1) according to any one of the foregoing claims, wherein the multiport transformer (1) is a single phase transformer, wherein the first core (8.1) and/or the second core (8.2) of the integrated magnetic core structure (8) is U-shaped, respectively comprising two leg portions (10), wherein the leg portions (10) of the first core (8.1) and/or the second core (8.2) define one first winding window (15).

12. Multiport transformer (1) according to any one of claims 1 to 10, wherein the multiport transformer (1) is a two-phase transformer, wherein the first core (8.1) and/or the second core (8.2) of the integrated magnetic core structure (8) is E-shaped, respectively comprising three leg portions (10), wherein the leg portions (10) of the first core (8.1) and/or the second core (8.2) define two first winding windows (15).

13. Multiport transformer (1) according to claim 12, wherein the tertiary winding (6) is wound, with respect to the second core (8.2) and/or the third core (8.3), around only one or more middle leg portion(s) (10.2) of the second winding window (16).

14. Multiport transformer (1) according to any one of claims 1 to 10, wherein the multiport transformer (1) is a three-phase transformer, wherein the first core (8.1) and/or the second core (8.2) of the integrated magnetic core structure (8) are W-shaped, respectively comprising five leg portions (10), wherein the leg portions (10) of the first core (8.1) and/or the second core (8.2) define four first winding windows (15).

15. Integrated high voltage and low voltage converter (100) comprising the multiport transformer (1) according to any one of the foregoing claims, wherein the first port (3) is connected to a grid (101), the second port (5) is connected a high voltage battery (102), and the third port (7) is connected to a low voltage battery (103).
